# DEMANDE DE BREVET EUROPEEN

(11) **EP 0 704 779 A1**
(43) Date de publication de la demande: **03.04.1996**
(21) Numéro de dépôt: 95402162.2
(22) Date de dépôt: 27.09.1995
(51) Int. Cl.: G05B 15/02

(54) **Dispositif de télécommande d'organes, tels que des vannes, à actionnement hydraulique en milieu sous-marin**

(30) Priorité: 27.09.1994 FR 9411496
(71) Demandeur: SOCIETE ECA, Société dite, F-92600 Asnières (FR)
(72) Inventeur: Charbonnier, Yves Abel Georges, F-83400 Hyères (FR); Vigne, Christian Marcel Jean, F-83320 Carqueiranne (FR)
(74) Mandataire: Nony, Michel

(57) **Abrégé**

Chaque module (4) comporte un microprocesseur (13), une interface (23) pour son raccordement au réseau (6), une première mémoire non volatile programmable et effaçable électriquement (17), une seconde mémoire vive (16) pour le fonctionnement du microprocesseur (13) et des ports de sortie (24) aptes à être raccordés à un actionneur commandant l'organe à actionnement hydraulique, un programme de démarrage et de chargement étant inscrit dans la première mémoire non volatile (17) et étant prévu pour être automatiquement exécuté par le microprocesseur (13) à la mise sous tension du module (4), et effectuer le chargement dans la première mémoire non volatile (17) d'un logiciel spécifique reçu par l'interface (23).

## Description

La présente invention concerne un dispositif de télécommande d'organes, tels que des vannes à actionnement hydraulique en milieu sous-marin, notamment de vannes d'une tête de puits d'un gisement pétrolier sous-marin.

Une tête de puits d'un gisement pétrolier sous-marin est équipée d'une structure située au niveau du fond sous-marin, appelée "arbre de Noël" et comportant un grand nombre de vannes à actionnement hydraulique.

Dans les systèmes conventionnels, la manoeuvre des vannes s'effectue à partir d'une unité centrale reliée par des tuyaux flexibles à des actionneurs hydrauliques associés chacun à une vanne.

Ces systèmes présentant l'inconvénient d'être lourds et coûteux, il a déjà été proposé de remplacer l'unité centrale par une pluralité de modules autonomes, appelés télé-opérateurs de vannes, qui sont commandés individuellement les uns des autres.

Ces télé-opérateurs de vannes autonomes apparaissent comme étant la solution la plus adaptée aux problèmes de maintenance des têtes de puits, dans la mesure où le dysfonctionnement d'un télé-opérateur isolé n'entraîne pas la mise hors service de la totalité de la tête de puits, comme cela se produit en cas de défaillance de l'unité centrale.

Cependant, chaque télé-opérateur de vanne devant être raccordé individuellement à une centrale de commande, un tel dispositif nécessite un nombre important de connexions.

Il a déjà été suggéré de constituer un réseau auquel seraient reliés tous les télé-opérateurs de vannes d'une même tête de puits, ce qui permettrait par exemple de réduire le nombre de connexions nécessaires.

Cette solution, a priori satisfaisante en ce qui concerne la réduction du nombre de connexions, pose cependant le problème de la fiabilité du fonctionnement d'un tel réseau, le souci étant toujours présent de se prémunir contre les risques de paralysie de la totalité de la tête de puits.

En effet, la mise en réseau des télé-opérateurs de vanne ne se résume pas à un simple branchement de ces derniers sur un même circuit électrique, du fait notamment de la multiplicité des tâches que doivent accomplir les différents télé-opérateurs de vanne.

Ainsi, sur une même tête de puits, on trouve des télé-opérateurs de vanne qui fonctionnent de manière radicalement différentes les uns des autres, certains collectant en outre des informations diverses reçues de capteurs placés sur la tête de puits.

Par conséquent, il est nécessaire que les télé-opérateurs de vanne puissent, d'une part, être tous reliés à un même réseau, et d'autre part, remplir des rôles différents sur la tête de puits, en fonction de la vanne qu'ils commandent.

Les moyens permettant d'atteindre un tel objectif doivent en outre être compatibles avec les conditions dans lesquelles ils sont amenés à fonctionner, c'est-à-dire en milieu sous-marin et éventuellement à grande profondeur.

La présente invention vise à fournir un dispositif de télécommande spécialement adapté à des installations fixes sous-marines, notamment des vannes d'une tête de puits qui réponde à ces exigences, notamment de fiabilité.

La présente invention a pour objet un dispositif de télécommande d'organes, à actionnement hydraulique en milieu sous-marin, notamment de vannes à actionnement hydraulique d'une tête de puits d'un gisement pétrolier sous-marin comportant une pluralité de modules reliés en réseau, chaque module étant associé à un desdits organes d'actionnement hydraulique, caractérisé par le fait que chaque module comporte un microprocesseur, une interface pour son raccordement au réseau, une première mémoire non volatile programmable et effaçable électriquement, une seconde mémoire vive pour le fonctionnement du microprocesseur et des ports de sortie aptes à être raccordés à un actionneur commandant l'organe à actionnement hydraulique, un programme de démarrage et de chargement étant inscrit dans la première mémoire non volatile et étant prévu pour être automatiquement exécuté par le microprocesseur à la mise sous tension du module, et effectuer le chargement dans la première mémoire non volatile d'un logiciel spécifique reçu par l'interface.

Le dispositif de télécommande selon l'invention présente l'avantage que chaque module peut être adapté précisément aux tâches spécifiques que l'on désire lui confier, sans qu'il soit nécessaire d'intervenir sur sa structure matérielle, donc dans de bonnes conditions de fiabilité.

En d'autres termes, le dispositif de télécommande selon l'invention présente à la fois les avantages d'un dispositif réalisé sur mesure, parfaitement adapté à l'utilisation qui en est faite, et ceux d'un dispositif fabriqué en grande série.

Du fait qu'il est adapté à son utilisation spécifique d'une manière purement logique, chaque module du dispositif de télécommande selon l'invention peut, dès sa sortie d'usine, être enfermé dans un boîtier étanche, l'interface et le port de sortie étant seuls accessibles depuis l'extérieur de ce boîtier.

Ceci constitue un avantage essentiel dans le domaine de l'invention, à savoir l'équipement d'installations sous-marines, car le niveau de fiabilité requis dans ce domaine est très élevé en raison notamment du coût des interventions de maintenance.

En effet, que ce soit en faible profondeur où un plongeur peut intervenir ou en grande profondeur où un robot est nécessaire, il faut pouvoir faire l'économie d'une intervention pendant les dix à quinze années qui suivent l'équipement de l'installation.

Par ailleurs, le fait de pouvoir enfermer chaque module dans un boîtier étanche rend le dispositif selon l'invention assez compact et relativement simple à réparer, lorsque, malgré tout, cela s'avère nécessaire. Les moyens mis en oeuvre pour cette réparation peuvent donc être assez légers.

Dans un mode de réalisation préféré de l'invention, le module comporte en outre des ports d'entrée, aptes à être raccordés à des capteurs, par exemple de pression ou de température, qui relèvent des mesures, lesquelles peuvent être traitées par le microprocesseur du circuit, et/ou envoyées au travers du réseau à destination d'une centrale de commande.

Selon l'invention chaque module du dispositif peut être configuré, c'est-à-dire que sa première mémoire non volatile peut enregistrer un logiciel avant sa mise en place et son installation en réseau ou après celle-ci, au travers du réseau.

En effet, le premier logiciel à être chargé automatiquement dans la première mémoire non volatile du module par le microprocesseur exécutant le programme de démarrage et de chargement peut prévoir qu'en cours d'utilisation du dispositif, le module puisse être configuré à nouveau au travers du réseau.

Dans une moindre mesure, ce logiciel peut également prévoir que certains de ses paramètres puissent être remis à jour au travers du réseau.

Dans le but de mieux faire comprendre l'invention, on va en décrire maintenant un mode de réalisation donné à titre d'exemple non limitatif en référence au dessin annexé dans lequel :
- la figure 1 représente schématiquement une tête de puits pétrolier sous-marin équipée de vannes commandées par un dispositif selon l'invention,
- la figure 2 représente fonctionnellement différents modules reliés en réseau du dispositif de la figure 1,
- la figure 3 représente schématiquement le circuit hybride d'un des modules de la figure 2.

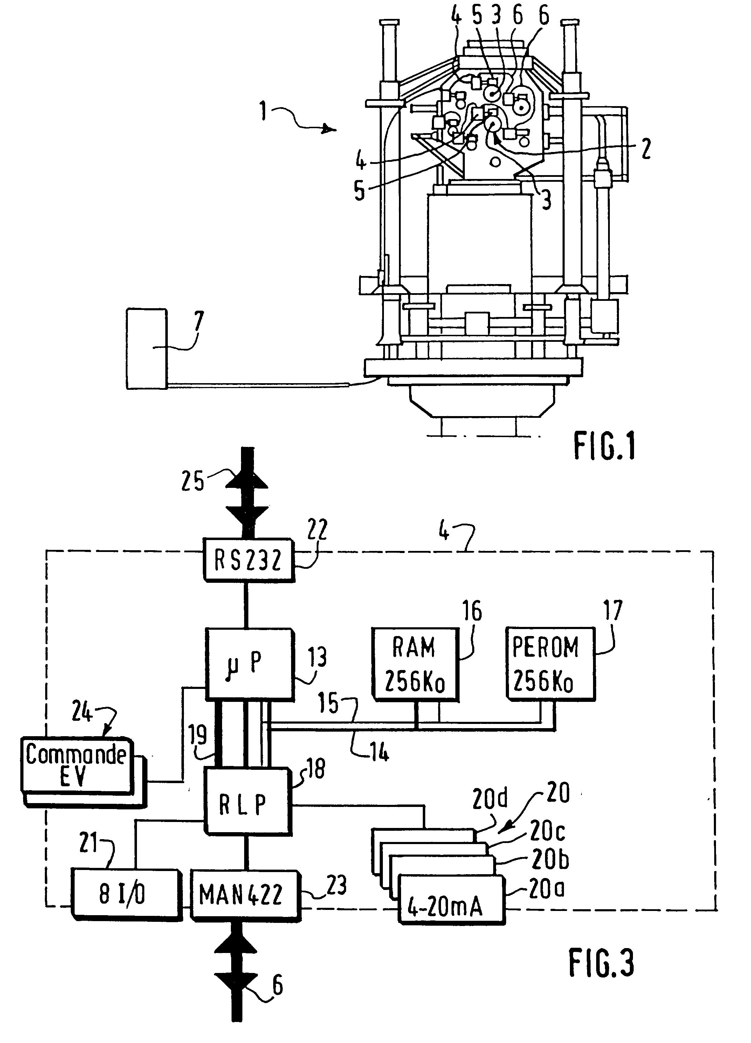

La figure 1 représente une tête de puits 1 équipée d'un arbre de Noël qui comporte plusieurs vannes 2 à actionnement hydraulique.

Un actionneur hydraulique 3 est associé à chaque vanne 2.

Un module autonome 4, ou télé-opérateur de vanne, est raccordé à chaque actionneur hydraulique 3 par l'intermédiaire d'un boîtier de raccordement 5.

Les différents modules sont reliés sur un réseau 6 et raccordés à une tête d'ombilical 7.

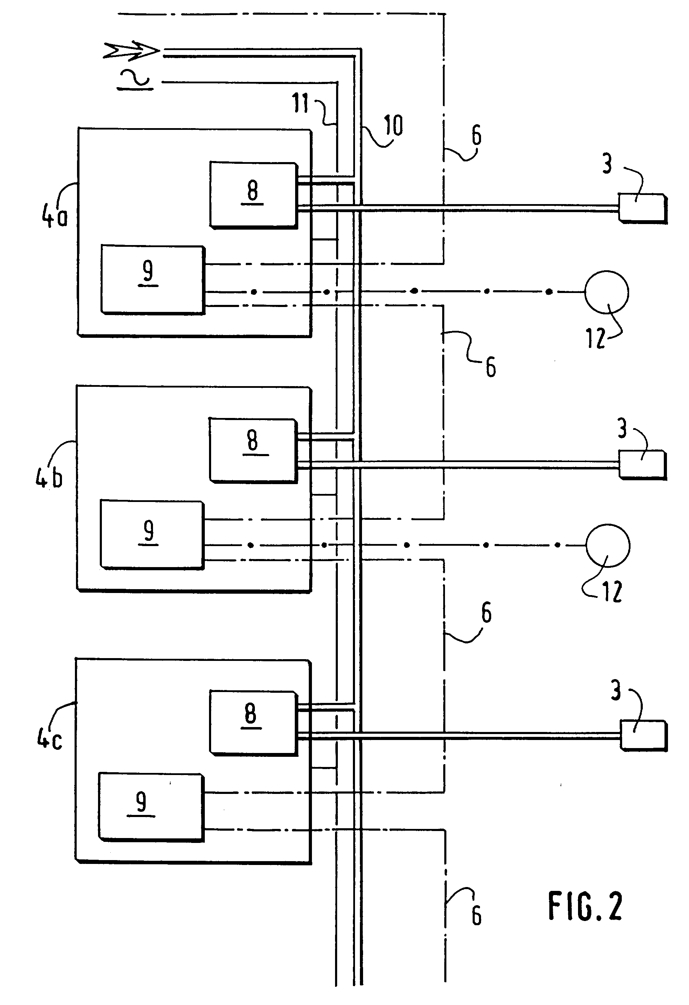

Sur la figure 2, on a représenté schématiquement trois des modules 4 de la figure 1, qui sont enfermés chacun dans un boîtier étanche, apte à maintenir une pression égale à la pression extérieure environnante.

Ces modules 4 sont reliés en réseau par une liaison 6 qui est schématisée en traits mixtes sur cette figure 2.

Chaque module 4 comprend notamment une électrovanne 8 et un circuit électronique 9.

L'électrovanne 8 est alimentée en fluide sous pression par une conduite 10 à laquelle est raccordé chaque module et, envoie ce fluide à l'actionneur 3 de la vanne 2 correspondante.

Chaque module 4 est alimenté électriquement au moyen d'un circuit d'alimentation en courant 11.

Deux des modules 4 représentés en haut sur la figure 2, sont en outre reliés à un capteur 12 qui relève des mesures sur la tête de puits.

Sur la figure 3, on a représenté le circuit électronique 9 d'un module 4.

Dans un tel circuit, les liaisons sont réduites autant que possible, ce qui accroît la fiabilité et la compacité du module.

Ce circuit comporte un microprocesseur 13, par exemple celui vendu sous la référence 68302 par la société Motorola, relié par un bus de données 14 et un bus d'adresses 15 à une première mémoire non volatile programmable et effaçable électriquement 17 et à une seconde mémoire vive 16.

Un réseau logique programmable 18 est également relié au microprocesseur 13 par les bus de données 14 et d'adresses 15 et par un bus de contrôle 19 qui permet la configuration dudit réseau logique programmable 18 par le microprocesseur 13.

Le réseau logique programmable 18 est relié à quatre étages d'acquisition analogiques 20 et à huit ports d'entrée/sortie 21.

Une première interface 22, du type RS 232, est reliée au microprocesseur 13 et une seconde interface 23, de type Manchester 422, est reliée au réseau logique programmable 18.

Le microprocesseur 13 est également relié à deux transistors de puissance 24 qui contrôlent le courant fourni à l'électrovanne 8 de l'actionneur 3 correspondant.

L'électrovanne 8 étant de préférence bistable, deux solénoïdes sont nécessaires pour la commander.

En outre, pour des raisons de sécurité, ces solénoïdes sont doublés, ce qui permet, en cas de défaillance d'un solénoïde, de recourir à l'autre solénoïde.

Le courant circulant dans les solénoïdes est mesuré, et sa valeur est retournée au microprocesseur 13, qui peut ainsi contrôler le bon fonctionnement des solénoïdes.

Sur les quatre étages d'acquisition analogiques 20, deux 20a, 20b, peuvent être utilisés pour collecter les mesures prises par des capteurs, non représentés, par exemple placés sur l'arbre de Noël et un troisième 20c pour recueillir la pression de sortie du module 4 de manière à vérifier que, lorsque l'on commande l'électrovanne 8, celle-ci se met en action, ce qui se traduit par une montée en pression dans l'organe d'actionnement de la vanne.

Le quatrième étage d'acquisition analogique 20d, ainsi que les huit ports d'entrée/sortie 21, sont disponibles pour des utilisations diverses qui ne seront pas décrites ici.

Le réseau logique programmable 18 est configuré pour, d'une part, assurer le codage biphase nécessaire à la communication au travers du réseau par l'interface Manchester 23, et, d'autre part, pour transformer en informations numériques exploitables par le microprocesseur 13, les signaux issus des étages d'acquisition analogiques 20.

Conformément à l'invention, la première mémoire non volatile 17 renferme initialement un programme de démarrage et de chargement qui est automatiquement exécuté par le microprocesseur 13 lors de la première mise sous tension du module 4.

Ce programme de démarrage et de chargement est identique pour tous les modules.

Lors de son exécution, ce programme permet l'inscription dans la première mémoire non volatile 17 qui est électriquement programmable, d'un logiciel spécifique reçu par l'interface RS 232 22, logiciel que le microprocesseur 13 exécutera lorsque le module sera mis en place sur la tête de puits.

L'interface RS 232 22 est donc destinée à n'être utilisée qu'une seule fois, lors de la première configuration du circuit électronique.

Les signaux sont alors envoyés au circuit par un réseau de service 25 connecté à l'interface 22.

En particulier, dans une variante, le circuit électronique ne comporte qu'une seule interface 23 qui sert à la fois au premier téléchargement d'un logiciel spécifique et à la connexion sur le réseau 6.

Avantageusement, le logiciel ainsi téléchargé comporte des paramètres qui peuvent être mis à jour au travers du réseau 6 qui est relié à l'interface Manchester 23.

Dans une variante, la totalité du logiciel spécifique peut être effacée, un nouveau logiciel spécifique étant à nouveau téléchargé au travers de ce réseau.

L'avantage d'un circuit tel qu'il vient d'être décrit réside dans le fait qu'il peut être fabriqué en grande série, la spécificité de chaque exemplaire étant ultérieurement introduite par téléchargement d'un logiciel particulier à chaque module.

Cette adaptation logique du circuit présente en outre l'avantage de permettre l'isolation du module à l'intérieur d'un boîtier étanche résistant à la pression d'immersion, grâce par exemple à un fluide diélectrique inerte qui occupe la totalité du volume intérieur du boîtier.

En outre, le fait que l'accès à l'intérieur du module soit impossible contribue à améliorer la fiabilité de ce dernier en évitant toute intervention malencontreuse sur les éléments qui le composent.

Il est bien entendu que le mode de réalisation qui vient d'être décrit ne présente aucun caractère limitatif et qu'il pourra recevoir toutes modifications désirables sans sortir pour cela du cadre de l'invention.

## Revendications

1. Dispositif de télécommande d'organes, à actionnement hydraulique en milieu sous-marin, notamment de vannes à actionnement hydraulique d'une tête de puits d'un gisement pétrolier sous-marin comportant une pluralité de modules reliés en réseau, chaque module étant associé à un desdits organes d'actionnement hydraulique, caractérisé par le fait que chaque module (4) comporte un microprocesseur (13), une interface (23) pour son raccordement au réseau (6), une première mémoire non volatile programmable et effaçable électriquement (17), une seconde mémoire vive (16) pour le fonctionnement du microprocesseur (13) et des ports de sortie (24) aptes à être raccordés à un actionneur (3) commandant l'organe à actionnement hydraulique (2), un programme de démarrage et de chargement étant inscrit dans la première mémoire non volatile (17) et étant prévu pour être automatiquement exécuté par le microprocesseur (13) à la mise sous tension du module (4), et effectuer le chargement dans la première mémoire non volatile (17) d'un logiciel spécifique reçu par l'interface (23).

2. Dispositif selon la revendication 1, caractérisé par le fait que le module (4) comporte en outre des ports d'entrée (20, 21) aptes à être raccordés à des capteurs, par exemple de pression ou de température.

3. Dispositif selon l'une quelconque des revendications 1 et 2, caractérisé par le fait que l'interface (23) peut en outre recevoir au travers du réseau (6) un nouveau logiciel spécifique à inscrire dans la première mémoire non volatile (17) à la place d'un logiciel spécifique précédemment téléchargé.
